# EUROPEAN PATENT APPLICATION

(11) **EP 4 826 283 A1**
(43) Date of publication of application: **21.10.2026**
(21) Application number: 24902036.3
(22) Date of filing: 31.05.2024
(51) Int. Cl.: F16K 1/38, F16K 47/02, F16K 1/02, F16K 1/32, F16K 1/48, F25B 41/31, B60H 1/32

(54) **VALVE CORE ASSEMBLY, EXPANSION VALVE AND VEHICLE-MOUNTED AIR CONDITIONER**

(30) Priority: 15.12.2023 CN 202323438716 U
(71) Applicant: BYD Company Limited, Shenzhen, Guangdong 518118 (CN)
(72) Inventor: TAN, Chaozhi, Shenzhen, Guangdong 518118 (CN); LAI, Ying, Shenzhen, Guangdong 518118 (CN); LI, Yi, Shenzhen, Guangdong 518118 (CN)
(74) Representative: Mathys & Squire
(86) International application number: PCT/CN2024/096847
(87) International publication number: WO 2025/123607

(57) **Abstract**

A valve core assembly, an expansion valve, and a vehicle-mounted air conditioner are disclosed. The valve core assembly includes a valve core and a screw. The valve core is provided therein with a first through hole section, a second through hole section, and an internal threaded section located between the first through hole section and the second through hole section. The screw is provided thereon with a first guide section, a second guide section, and an external threaded section located between the first guide section and the second guide section. When the valve core and the screw are threadedly engaged, axial guidance is provided both above and below a threaded pair.

## Description

This application claims priority to Chinese Patent Application No. 202323438716.3, filed on December 15, 2023 and entitled "VALVE CORE ASSEMBLY, EXPANSION VALVE, AND VEHICLE-MOUNTED AIR CONDITIONER", which is incorporated herein by reference in its entirety.

### TECHNICAL FIELD

This application relates to the technical field of expansion valves, and specifically, to a valve core assembly, an expansion valve, and a vehicle-mounted air conditioner.

### BACKGROUND

An expansion valve is an important component in a refrigeration system and is widely used in indoor air conditioners, vehicle-mounted air conditioners, evaporators, and refrigerators. The expansion valve uses a coolant as a working medium, and an operating temperature ranges from -40°C to 125°C. The expansion valve is required to have low noise, low power consumption, high sensitivity, and low starting voltage during operation. The expansion valve is mainly configured to control the flow rate of the refrigerant, to ensure that the refrigerant at an outlet of an evaporator is completely gaseous. If the flow rate is excessively high, there is liquid refrigerant at the outlet, which may enter a compressor causing liquid slugging. If the flow rate of the refrigerant is excessively low, the refrigerant is prematurely evaporated, resulting in insufficient cooling.

The expansion valve typically controls the fluid flow by rotating a rotor that drives a screw to move up and down, which in turn drives a valve needle to move up and down. However, when the rotor and the screw rotate, excessive runout may generate noise and further affect flow control accuracy.

### SUMMARY

A series of concepts in a simplified form are introduced in the content of this application, which are further described in detail in the DETAILED DESCRIPTION OF EMBODIMENTS. The content of this application is not intended to define key features or essential technical features of claimed technical solutions, nor is it intended to limit the scope of protection of the claimed technical solutions.

This application provides a valve core assembly, including:
a valve core, a valve core inner hole being formed in the valve core, and the valve core inner hole including a first through hole section, a second through hole section, and an internal threaded section located between the first through hole section and the second through hole section; and
a screw, the screw passing through the valve core inner hole, the screw including a rotor fitting portion, a valve needle fitting portion, and a valve core fitting portion disposed between the rotor fitting portion and the valve needle fitting portion, the rotor fitting portion being configured to connect to the rotor, the valve needle fitting portion being configured to connect to a valve needle, and the valve core fitting portion including a first guide section, a second guide section, and an external threaded section located between the first guide section and the second guide section,
wherein the first through hole section is in guiding fit with the first guide section in an axial direction of the screw, the second through hole section is in guiding fit with the second guide section in the axial direction of the screw, the internal threaded section and the external threaded section are threadedly engaged, a gap between inner walls of the first guide section and the first through hole section is smaller than a gap between the external threaded section and the internal threaded section, and a gap between inner walls of the second guide section and the second through hole section is smaller than the gap between the external thread and the internal threaded section.

Optionally, a difference between the gap between the external threaded section and the internal threaded section and the gap between the inner walls of the second guide section and the second through hole section ranges from 0.03 mm to 0.05 mm, the gap between the inner walls of the first guide section and the first through hole section ranges from 0.01 mm to 0.03 mm, the gap between the inner walls of the second guide section and the second through hole section ranges from 0.03 mm to 0.05 mm, and the gap between the external threaded section and the internal threaded section ranges from 0.05 mm to 0.08 mm.

Optionally, the valve core is provided therein with a valve core internal connector, the valve core internal connector is provided with a locating hole, the valve core is made of an injection molding material, the valve core internal connector is made of a metal material, and the injection molding material includes polyetheretherketone.

This application further provides an expansion valve, including the valve core assembly according to any one of the foregoing. The expansion valve further includes a housing assembly, a valve needle, and a rotor, wherein the housing assembly is provided with an internal space, a first channel, and a second channel, and the valve core is riveted to the housing assembly; the valve needle is movably disposed in the internal space, and the valve needle is connected to the screw; and the rotor is configured to drive the screw to rotate relative to the valve core, thereby moving the valve needle to adjust a fluid flow between the second channel and the internal space.

Optionally, the housing assembly includes a valve body, a valve seat and a cover body, wherein the valve body is fixedly connected to the valve core, the cover body covers the outside of the rotor, a lower end of the cover body is fixedly connected to the valve body, the cover body and the valve body are in an interference fit to form an upper portion of the internal space, the valve seat is fixedly connected to the valve body, the valve seat and valve body are in an interference fit to form a lower portion of the internal space, and the upper portion of the internal space is in communication with the lower portion of the internal space to form a valve cavity.

Optionally, a first channel hole for forming the first channel is formed in a side wall of the valve body, and a second channel hole for forming the second channel is formed in a middle region of the valve seat.

Optionally, the rotor fitting portion of the screw is fixedly connected to the rotor, the rotor is sleeved on the outside of the valve core, when the rotor rotates, the rotor drives the screw to rotate, through a threaded pair formed by engagement of the external threaded section and the internal threaded section, rotation of the rotor is converted into a linear motion of the valve needle in an axial direction, thereby opening or closing the second channel hole.

Optionally, the valve needle fitting portion of the screw is provided with a screw cavity, a first end of a screw pressing head of the valve needle extends into the screw cavity to fixedly connect or detachably connect to the screw, a flange portion at a second end of the screw pressing head extends into a valve needle cavity of the valve needle, and the valve needle cavity is in communication with the valve cavity.

Optionally, the valve needle cavity is provided with a valve needle spring, and the valve needle spring is in a compressed state.

This application further provides a vehicle-mounted air conditioner, including the expansion valve according to any one of the foregoing.

In the valve core assembly, the expansion valve, and the vehicle-mounted air conditioner according to this application, the valve core is provided therein with the first through hole section, the second through hole section, and the internal threaded section located between the first through hole section and the second through hole section, and the screw is provided thereon with the first guide section, the second guide section, and the external threaded section located between the first guide section and the second guide section, so that when the valve core and the screw are threadedly engaged, axial guidance is provided both above and below a threaded pair, which prevents excessive runout of the screw and the rotor, reduces noise of the expansion valve, and improves flow control accuracy of the expansion valve.

### DESCRIPTION OF DRAWINGS

The following accompanying drawings of this application are included herein as part of this application for understanding of this application. Embodiments of this application and descriptions thereof are shown in the accompanying drawings to explain principles of this application.

In the accompanying drawings:
FIG. 1 is a diagram of a structure of an expansion valve according to an embodiment of this application;
FIG. 2 and FIG. 3 are diagrams of a structure of a valve core according to an embodiment of this application; and
FIG. 4 is a diagram of a structure of a screw and a valve needle according to an embodiment of this application.

### Reference numerals

| | | | |
|---|---|---|---|
| 1: | cover body | 2: | rotor |
| 3: | limiting mechanism | 4: | screw |
| 5: | valve core | 6: | valve body |
| 7: | valve needle | 8: | valve seat |
| 31: | limiting rod | 32: | limiting spring |
| 41: | first guide section | 42: | second guide section |
| 43: | external threaded section | 50: | valve core inner hole |
| 51: | first through hole section | 52: | second through hole section |
| 53: | internal threaded section | 54: | valve core internal connector |
| 55: | locating hole | 71: | screw pressing head |
| 72: | valve needle pressing ring | 73: | valve needle spring |
| 74: | valve needle washer | | |

### DETAILED DESCRIPTION OF EMBODIMENTS

In following descriptions, numerous specific details are set forth to provide a more thorough understanding of this application. However, it will be apparent to a person skilled in the art that this application can be implemented without one or more of these details. In other examples, to avoid confusion with this application, some technical features well-known in the art have not been described.

To fully understand this application, detailed descriptions are provided in the following to explain the expansion valve and the vehicle-mounted air conditioner provided in this application. Obviously, implementation of this application is not limited to specific details familiar to a person skilled in the art of expansion valves. Preferred embodiments of this application are described in detail below. However, in addition to these detailed descriptions, this application may have other implementations.

It will be noted that terms used herein are merely for the purpose of describing specific embodiments and are not intended to limit exemplary embodiments of this application. As used herein, unless the context clearly indicates otherwise, the singular form is also intended to include the plural form. In addition, it also will be noted that when used in this specification, the terms "including" and/or "comprising" indicate the presence of said features, integers, steps, operations, elements and/or assemblies, but do not exclude the presence or attachment of one or more other features, integers, steps, operations, elements, assemblies, and/or combinations thereof.

Exemplary embodiments of this application will now be described in detail with reference to the accompanying drawings. However, these exemplary embodiments may be implemented in many different forms and will not be construed as being limited to embodiments set forth herein. It will be understood that these embodiments are provided so that disclosure of this application is thorough and complete, and that concepts of these exemplary embodiments are fully conveyed to a person of ordinary skill in the art. In the accompanying drawings, for clarity, the thicknesses of layers and regions are exaggerated; and same reference numerals are used to denote same elements, and therefore, descriptions thereof will be omitted.

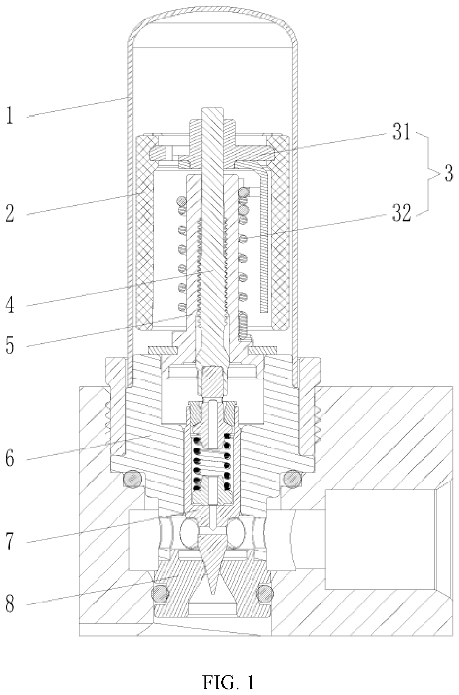

This application provides a valve core assembly, as shown in FIG. 1, including a valve core 5 and a screw 4.

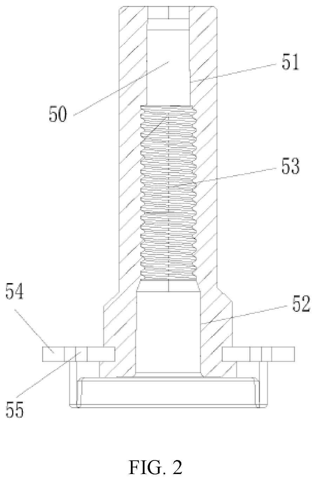

Referring to FIG. 2, a valve core inner hole 50 is formed in the valve core 5. The valve core inner hole 50 includes a first through hole section 51, a second through hole section 52, and an internal threaded section 53 located between the first through hole section and the second through hole section.

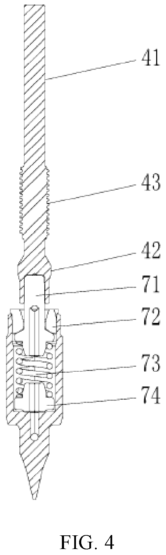

Referring to FIG. 1 and FIG. 4, the screw 4 passes through the valve core inner hole. The screw 4 includes a rotor fitting portion, a valve needle fitting portion, and a valve core fitting portion disposed between the rotor fitting portion and the valve needle fitting portion. The rotor fitting portion is configured to connect to the rotor 2. The valve needle fitting portion is configured to connect to a valve needle 7. The valve core fitting portion includes a first guide section 41, a second guide section 42, and an external threaded section 43 located between the first guide section and the second guide section.

In an embodiment, the first through hole section 51 is in guiding fit with the first guide section 41 in an axial direction of the screw 4. The second through hole section 52 is in guiding fit with the second guide section 42 in the axial direction of the screw. The internal threaded section 53 and the external threaded section 43 are threadedly engaged, a gap between inner walls of the first guide section and the first through hole section is smaller than a gap between the external threaded section and the internal threaded section, and a gap between inner walls of the second guide section and the second through hole section is smaller than the gap between the external thread and the internal threaded section.

In an embodiment, the gap between the external threaded section 43 and the internal threaded section 53 includes a radial gap formed between a thread crest of the external threaded section and a thread root of the internal threaded section, and the gap between the external threaded section and the internal threaded section further includes a radial gap formed between a thread root of the external thread and a thread crest of the internal thread. The gap between the inner walls of the first guide section 41 and the first through hole section 51 is a gap between an outer surface of the first guide section of the screw and the inner wall of the first through hole section of the valve core inner hole. The gap between the inner walls of the second guide section 42 and the second through hole section 52 is a gap between an outer surface of the second guide section of the screw and the inner wall of the second through hole section of the valve core inner hole.

In an embodiment, a difference between the gap between the external threaded section and the internal threaded section and the gap between the inner walls of the second guide section and the second through hole section ranges from 0.03 mm to 0.05 mm. The gap between the inner walls of the first guide section and the first through hole section ranges from 0.01 mm to 0.03 mm. The gap between the inner walls of the second guide section and the second through hole section ranges from 0.03 mm to 0.05 mm. The gap between the external threaded section and the internal threaded section ranges from 0.05 mm to 0.08 mm.

Above and below the internal threaded section and the external threaded section used for threaded engagement, the first through hole section and the first guide section, as well as the second through hole section and the second guide section are respectively disposed for clearance fit, so that the screw is axially guided when moving up and down relative to the valve core, which prevents excessive runout of the screw and the rotor. Furthermore, a gap size of a guide channel is less than a gap size of the threaded pair, which further limits a runout range of the screw and the rotor.

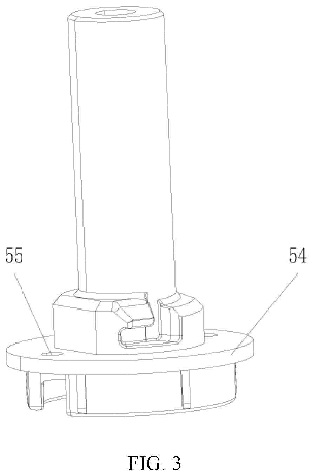

In an embodiment, the valve core 5 is made of an injection molding material. The injection molding material includes, but is not limited to, polyetheretherketone (PEEK). The valve core 5 may alternatively be made of other high-strength injection molding materials, which is not limited in this application. Using the high-strength injection molding material to manufacture the valve core 5 not only avoids damage to the valve core, reduces replacement frequency of the valve core, and prolongs service life of the valve core, but also allows the valve core internal connector 54 shown in FIG. 2 and FIG. 3 to be formed during an injection molding process, thereby simplifying a production process of the valve core 5 with the valve core internal connector 54. The valve core internal connector 54 can be made of a metal material. For example, an in-mold injection steel sheet made of stainless steel (SUS304) is used as the valve core internal connector 54. The valve core internal connector 54 is provided with one or more locating holes 55. The locating holes 55 are configured to connect the valve core 5 to other components (for example, the valve body).

This application provides an expansion valve, as shown in FIG. 1, including the foregoing valve core assembly, and further including a housing assembly, a valve needle 7, and a rotor 2. The housing assembly is provided with an internal space, a first channel, and a second channel. The valve core 5 is riveted to the housing assembly. The valve needle 7 is movably disposed in the internal space. The valve needle 7 is connected to the screw 4. The rotor 2 is configured to drive the screw 4 to rotate relative to the valve core 5, thereby moving the valve needle 7 to adjust a fluid flow between the second channel and the internal space.

In an embodiment, the housing assembly includes a valve body 6, a valve seat 8, and a cover body 1. The valve body 6 is fixedly connected to the valve core 5. The cover body 1 covers the outside of the rotor 2. A lower end of the cover body 1 is fixedly connected to the valve body 6. The cover body 1 and the valve body 6 are in an interference fit to form an upper portion of the internal space. The valve seat 8 is fixedly connected to the valve body 6. The valve seat 8 and valve body 6 are in an interference fit to form a lower portion of the internal space. The upper portion of the internal space is in communication with the lower portion of the internal space to form a valve cavity.

In an embodiment, the cover body 1 is made of a magnetic shielding material. Specifically, the cover body 1 includes, but is not limited to, an iron core cover. The cover body 1 is a rotary body structure, and a rotation center of the cover body 1 coincides with a rotation center of the screw 4. As shown in FIG. 1, the cover body 1 is provided with a single opening. The cover body 1 covers the outside of the rotor 2. A lower end of the cover body 1 (namely an open end) is fixedly connected to the valve body 6. Specifically, the lower end of the cover body 1 and the valve body 6 are in an interference fit. The cover body 1 and the valve body 6 are connected by welding. By combining interference fit with welding connection, stability of a connection between cover body 1 and valve body 6 is ensured. After being connected, the cover body 1 and valve body 6 form an upper portion of the valve cavity. The combination of interference fit and welding further enhances sealing performance of the valve cavity.

In an embodiment, the rotor 2 is made of a magnetically conductive material, and the rotor 2 is also referred to as a magnetic rotor. The rotor 2 is a rotary body structure, and a rotation center of the rotor 2 coincides with the rotation center of the screw 4. The rotor 2 is fixedly connected to a rotor fitting portion at a first end of the screw 4. Specifically, a central shaft of rotor 2 is a metal insert (not shown), and the metal insert and screw 4 may be fixedly connected by welding or other connection methods.

In an embodiment, as shown in FIG. 1, a limiting mechanism 3 is further included. The limiting mechanism 3 includes a limiting rod 31 and/or a limiting spring 32. A limiting rod 31 and a limiting rod fixing member are disposed in the middle of the rotor 2. After being interference-fitted from the bottom of the rotor 2, the limiting rod 31 penetrates through a front face of the limiting rod fixing member and is welded to the same. The limiting rod fixing member is welded to the screw 4 as a whole to implement a fixed connection between the limiting rod 31 and the screw 4. The valve core 5 is provided thereon with a limiting spring 32 and a spring guide rail. The limiting spring 32 may be made of a metal material. The limiting spring 32 is rotatably engaged with the spring guide rail and is limited by the limiting rod 31. An end portion of the limiting spring 32 is in contact with the limiting rod 31 to limit rotation of the rotor 2 and the screw 4.

In an embodiment, the screw 4 is a rotating structure. A material of the screw 4 includes, but is not limited to, metal materials. A first end of the screw 4 is a rotor fitting portion, which is configured to fixedly connect to the rotor 2, as described above. Referring to FIG. 1 and FIG. 4, the valve needle fitting portion of the screw 4 includes a screw cavity. The screw cavity is fixedly connected to or detachably connected to the valve needle 7.

In an embodiment, a valve core internal connector 54 is disposed in the valve core 5. A connection between the valve core 5 and the valve body 6 is implemented as follows. The valve core 5 is first riveted into the valve body 6 to rivet the valve core 5 and the valve body 6, and then the in-mold injection steel sheet (namely the valve core internal connector 54) and the valve body 6 are fixedly connected by welding or other connection methods. That is, the valve core internal connector 54 is fixedly connected to the valve body to implement a fixed connection between the valve core 5 and the valve body 6.

By riveting the valve core and the valve body and fixing the valve core to the valve body through the valve core internal connector, a dimension of the valve core in a height direction is shortened, making a structure of the expansion valve compact and reducing a volume of the expansion valve.

In an embodiment, a material of the valve body 6 includes, but is not limited to, metal materials. The valve body 6 is a rotary body structure, and a rotation center of the valve body 6 coincides with the rotation center of the screw 4. An upper portion of the valve body 6 and the cover body 1 are in an interference fit and fixedly connected, as described above. A middle portion of the valve body 6 is fixedly connected to the valve core 5 through the valve core internal connector 54, as described above. A lower portion of the valve body 6 is fixedly connected to the valve seat 8 by welding or other connection methods to form a lower portion of the valve cavity. The upper portion of the valve cavity that is formed by the connection between the valve body 6 and the cover body 1 is in communication with the lower portion of the valve cavity formed by the connection between valve body 6 and valve seat 8, to together form the valve cavity. In addition, a first channel hole for forming the first channel is formed in a side wall of the valve body 6, and the first channel hole is in communication with the valve cavity, so that the first channel is always in communication with the valve cavity.

In an embodiment, a material of the valve needle 7 includes, but is not limited to, metal materials. The valve needle 7 is a rotary body structure, and a rotation center of the valve needle 7 coincides with the rotation center of the screw 4. As shown in FIG. 4. The valve needle 7 includes a screw pressing head 71, a valve needle pressing ring 72, a valve needle spring 73, and a valve needle washer 74. A first end of the screw pressing head 71 extends into the screw cavity of the screw 4. The screw pressing head 71 and the screw 4 can be fixedly connected by welding or the like, or can be detachably connected by bolts or the like, which is not limited in this application. A second end of the screw pressing head 71 is provided with a flange portion, and the second end of the screw pressing head 71 extends into a valve needle cavity. The valve needle pressing ring 72 is disposed between the first end and the second end of the screw pressing head 71 to prevent the flange portion at the second end of the screw pressing head 71 from coming out of the valve needle cavity. The valve needle spring 73 may be made of a metal material to provide a stable positive sealing pressure for contact between the valve needle 7 and the valve seat 8. The valve needle washer 74 is located at the bottom of the valve needle spring 73 and may be made of a material with a self-lubricating property such as polytetrafluoroethylene (PTFE) to reduce friction with the valve needle spring 73. The valve needle washer 74 is a rotary body structure, with a rotation center coinciding with the rotation center of the screw 4.

In an embodiment, a material of the valve seat 8 includes, but is not limited to, metal materials. The valve seat 8 is a rotary body structure, and a rotation center of the valve seat 8 coincides with the rotation center of the screw 4. A second channel hole for forming the second channel is formed in a middle region of the valve seat 8. The second channel hole is in communication with the valve cavity. Specifically, the second channel hole is formed by rotating and cutting away the material along a profile composed of two straight lines in an upper portion and a circular arc in a lower portion. When the rotor 2 drives the screw 4 to rotate, which in turn drives the valve needle 7 to move linearly in an axial direction, the second channel hole can be opened or closed. When the second channel hole is closed, the second channel is not in communication with the valve cavity. When the second channel hole is open, the second channel is in communication with the valve cavity. In this case, the valve cavity, the first channel, and the second channel are in communication with each other.

In an embodiment, as shown in FIG. 1, the expansion valve further includes a seal ring. The seal ring includes a first seal ring disposed at the lower portion of the valve body 6 and a second seal ring disposed at the lower portion of the valve seat 8. The first seal ring and the second seal ring cooperate to isolate the first channel hole from the second channel hole.

In an embodiment, when an external coil is energized by a pulse, the rotor 2 rotates under the action of a magnetic field, which drives the screw 4 to rotate. Because the external threaded section of the screw 4 and the internal threaded section of the valve core 5 are configured to engage with each other, rotation of the rotor 2 is converted into a linear motion of the screw 4 in the axial direction. Because guide channels are provided both above and below the threaded pair, excessive runout of the screw and rotor can be avoided. An axial motion of the screw 4 drives the valve needle 7 to move axially, causing the valve needle to be in contact with or separate from the valve seat, thereby opening or closing the second channel of the valve cavity.

This application further provides a vehicle-mounted air conditioner, including the foregoing expansion valve.

This application further provides a vehicle, including the foregoing vehicle-mounted air conditioner.

In the valve core assembly, the expansion valve, and the vehicle-mounted air conditioner according to this application, the valve core is provided therein with the first through hole section, the second through hole section, and the internal threaded section located between the first through hole section and the second through hole section, and the screw is provided thereon with the first guide section, the second guide section, and the external threaded section located between the first guide section and the second guide section, so that when the valve core and the screw are threadedly engaged, axial guidance is provided both above and below a threaded pair, which prevents excessive runout of the screw and the rotor, reduces noise of the expansion valve, and improves flow control accuracy of the expansion valve.

This application has been described by the foregoing embodiments, but it will be understood that the foregoing embodiments are provided for purposes of illustration and description only, and are not intended to limit this application to the scope of the described embodiments. In addition, it will be understood by a person skilled in the art that this application is not limited to the foregoing embodiments, various variations and modifications may be made in accordance with the teachings of this application, and that these variations and modifications fall within the scope claimed in this application. The scope of protection of this application is limited by the appended claims and equivalents thereof.

## Claims

1. A valve core assembly, comprising:
a valve core (5), a valve core inner hole (50) being formed in the valve core (5), and the valve core inner hole (50) comprising a first through hole section (51), a second through hole section (52), and an internal threaded section (53) located between the first through hole section (51) and the second through hole section (52); and
a screw (4), the screw (4) passing through the valve core inner hole (50), the screw (4) comprising a rotor fitting portion, a valve needle fitting portion, and a valve core fitting portion disposed between the rotor fitting portion and the valve needle fitting portion, the rotor fitting portion being configured to connect to the rotor (2), the valve needle fitting portion being configured to connect to a valve needle (7), and the valve core fitting portion comprising a first guide section (41), a second guide section (42), and an external threaded section (43) located between the first guide section (41) and the second guide section (42),
wherein the first through hole section (51) is in guiding fit with the first guide section (41) in an axial direction of the screw (4), the second through hole section (52) is in guiding fit with the second guide section (42) in the axial direction of the screw (4), the internal threaded section (53) and the external threaded section (43) are threadedly engaged, a gap between inner walls of the first guide section (41) and the first through hole section (51) is smaller than a gap between the external threaded section (43) and the internal threaded section (53), and a gap between inner walls of the second guide section (42) and the second through hole section (52) is smaller than the gap between the external thread and the internal threaded section (53).

2. The valve core assembly according to claim 1, wherein a difference between the gap between the external threaded section (43) and the internal threaded section (53) and the gap between the inner walls of the second guide section (42) and the second through hole section (52) ranges from 0.03 mm to 0.05 mm, the gap between the inner walls of the first guide section (41) and the first through hole section (51) ranges from 0.01 mm to 0.03 mm, the gap between the inner walls of the second guide section (42) and the second through hole section (52) ranges from 0.03 mm to 0.05 mm, and the gap between the external threaded section (43) and the internal threaded section (53) ranges from 0.05 mm to 0.08 mm.

3. The valve core assembly according to any one of claims 1 and 2, wherein the valve core (5) is provided therein with a valve core internal connector (54), the valve core internal connector (54) is provided with a locating hole (55), the valve core (5) is made of an injection molding material, the valve core internal connector (54) is made of a metal material, and the injection molding material comprises polyetheretherketone.

4. An expansion valve, comprising:
the valve core assembly according to any one of claims 1 to 3;
a housing assembly, the housing assembly being provided with an internal space, a first channel, and a second channel, and the valve core (5) is riveted to the housing assembly;
a valve needle (7), the valve needle (7) being movably disposed in the internal space, and the valve needle (7) being connected to the screw (4); and
a rotor (2), the rotor (2) driving the screw (4) to rotate relative to the valve core (5) and driving the valve needle (7) to move to adjust a fluid flow between the second channel and the internal space.

5. The expansion valve according to claim 4, wherein the housing assembly comprises:
a valve body (6), the valve body (6) being fixedly connected to the valve core (5);
a cover body (1), the cover body (1) covering the outside of the rotor (2), a lower end of the cover body (1) being fixedly connected to the valve body (6), and the cover body (1) and the valve body (6) being in an interference fit to form an upper portion of the internal space; and
a valve seat (8), the valve seat (8) being fixedly connected to valve body (6), the valve seat (8) and valve body (6) being in an interference fit to form a lower portion of the internal space, and the upper portion of the internal space being in communication with the lower portion of the internal space to form a valve cavity.

6. The expansion valve according to claim 5, wherein a first channel hole for forming the first channel is formed in a side wall of the valve body (6), and a second channel hole for forming the second channel is formed in a middle region of the valve seat (8).

7. The expansion valve according to claim 6, wherein the rotor fitting portion of the screw (4) is fixedly connected to the rotor (2), the rotor (2) is sleeved on the outer side of the valve core (5), when the rotor (2) rotates, the rotor (2) drives the screw (4) to rotate, through a threaded pair formed by engagement of the external threaded section (43) and the internal threaded section (53), rotation of the rotor (2) is converted into a linear motion of the valve needle (7) in an axial direction, thereby opening or closing the second channel hole.

8. The expansion valve according to any one of claims 6 and 7, wherein the valve needle fitting portion of the screw (4) is provided with a screw cavity, a first end of a screw pressing head (71) of the valve needle (7) extends into the screw cavity to fixedly connect or detachably connect to the screw (4), a flange portion at a second end of the screw pressing head (71) extends into a valve needle cavity of the valve needle (7), and the valve needle cavity is in communication with the valve cavity.

9. The expansion valve according to claim 8, wherein the valve needle cavity is provided with a valve needle spring (73), and the valve needle spring (73) is in a compressed state.

10. A vehicle-mounted air conditioner, comprising the expansion valve according to any one of claims 4 to 9.
